(19) **Europäisches Patentamt / European Patent Office / Office européen des brevets**

(11) **EP 4 637 009 B1**

(12) **EUROPEAN PATENT SPECIFICATION**

(45) Date of publication and mention
of the grant of the patent:
**08.07.2026 Bulletin 2026/28**

(21) Application number: **25200011.2**

(22) Date of filing: **18.04.2024**

(51) International Patent Classification (IPC):
**H02M 1/00** *(2006.01)*      **H02M 1/32** *(2007.01)*
**H02M 3/335** *(2006.01)*     **H02M 1/08** *(2006.01)*

(52) Cooperative Patent Classification (CPC):
**H02M 1/0064; H02H 5/042; H02H 7/1213;**
**H02M 1/08; H02M 1/327; H02M 3/33523;**
**Y02B 70/10**

(54) **CONTROL CIRCUIT FOR USE IN A SWITCHING POWER SUPPLY**

STEUERSCHALTUNG ZUR VERWENDUNG IN EINER EINER SCHALTSTROMVERSORGUNG

CIRCUIT DE COMMANDE POUR L'EMPLOI DANS UNE ALIMENTATION À DÉCOUPAGE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **26.04.2023 CN 202310459348**

(43) Date of publication of application:
**22.10.2025 Bulletin 2025/43**

(62) Document number(s) of the earlier application(s) in
accordance with Art. 76 EPC:
**24171072.2 / 4 456 396**

(73) Proprietors:
• **Diodes Incorporated**
  **Plano, Texas 75024 (US)**
• **BCD Shanghai Micro-Electronics Company Limited**
  **Shanghai 200240 (CN)**

(72) Inventors:
• **ZHAO, Andong**
  **Shanghai, 200240 (CN)**
• **ZHAO, Feng**
  **Shanghai, 200240 (CN)**
• **GU, Zhuquan**
  **Shanghai, 200240 (CN)**
• **CHEN, BO**
  **Shanghai, 200240 (CN)**
• **YING, Zheng**
  **Shanghai, 200240 (CN)**
• **XIE, Yizhong**
  **Shanghai, 200240 (CN)**

(74) Representative: **Marks & Clerk LLP**
**15 Fetter Lane**
**London EC4A 1BW (GB)**

(56) References cited:
**CN-A- 111 799 761      US-A1- 2012 113 551**
**US-A1- 2013 301 302**

**Description**

TECHNICAL FIELD

The present application relates to the field of power adapters, and relates in particular to a control circuit for use in a switching power supply.

BACKGROUND

In today's power supply application scenarios, power supplies used as energy supply apparatuses are prone to generating heat. If the temperature is excessively high, hazards such as spontaneous combustion, explosions, etc., may even occur, resulting in unexpected losses. Current power adapters are typically provided with an internal overtemperature protection function, but the internal overtemperature protection function generally has poor precision, and cannot meet requirements in some particular application scenarios. In this case, an external negative temperature coefficient (NTC) resistor having a thermistor effect and material is needed to achieve precise overtemperature protection, otherwise, the power supply is at risk of overheating and exploding.

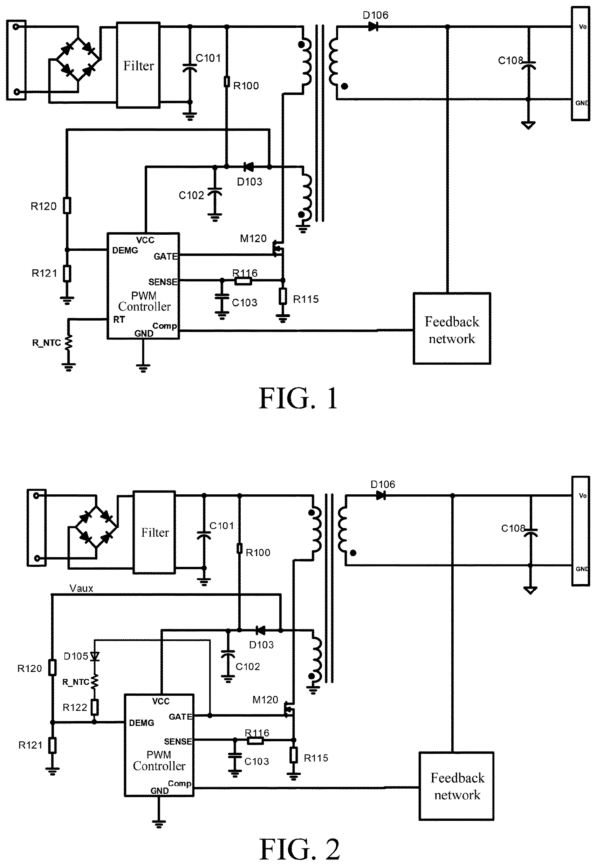

In a secondary side regulator (SSR) flyback converter architecture, a primary side pulse width modulation (PWM) controller needs to achieve overtemperature protection by means of an external NTC resistor, which means that the PWM controller needs to provide a pin to be connected to the NTC resistor to implement the overtemperature protection function. As shown in FIG. 1, in a system based on the SSR flyback architecture, in addition to existing VCC, DEMG, GND, Comp, SENSE, and GATE ends, a PWM controller further needs one additional pin (RT) for measuring a change in the resistance value of the NTC resistor (R_NTC), so as to achieve external overtemperature protection. The DEMG end is a port used by the PWM controller to sample a demagnetization signal of a switching power supply, and the GATE end is a control end for controlling the on and off of a power switch (M120) of the switching power supply.

However, in the case of a six-pin package (SOT23-6), there is no idle pin for connection of the NTC resistor to implement the NTC overtemperature protection function. In addition, existing pins have their own functions to implement, and blind connection of the NTC resistor may affect the implementation of the existing functions.

Therefore, those skilled in the art need an overtemperature protection circuit urgently, so as to solve the current problem of the difficulty in implementing an overtemperature protection function in SSR flyback architecture.

CN111799761A discloses a temperature protection method and circuit based on pin multiplexing. In the circuit disclosed by CN111799761A, a temperature coefficient temperature detection sub-circuit 3 and a gate of a power tube 1 multiplex the drive output pin OUT of a control chip 2. Specifically, one end of the temperature coefficient temperature detection sub-circuit 3 and the gate of the power tube 1 are commonly connected to the drive output pin OUT of the control chip 2, and the other end of the temperature coefficient temperature detection sub-circuit 3 is grounded.

SUMMARY

The objective of the present application is to provide a control circuit for use in a switching power supply, so as to solve the current problem of the difficulty in implementing an overtemperature protection function in the SSR flyback architecture.

To solve the above technical problem, the present invention provides a control circuit as defined by the appended claims.

In the overtemperature protection circuit provided in the present application, a temperature measurement circuit is coupled between a control end and a sampling end of a control circuit in a switching power supply system having a power switch, thereby introducing the acquisition of the ambient temperature of a switching power supply. Specifically, output voltages of the control end and the sampling end are clamped while the power switch is on, enabling a potential difference to be formed between the two ends of the temperature measurement circuit, so that the current ambient temperature of the switching power supply can be determined by means of a change in the magnitude of a current flowing through the temperature measurement circuit, thereby performing overtemperature protection. In addition, the temperature measurement circuit of the present application is unidirectionally conductive. While a power switch transistor is off, the voltage of the control end is pulled down because the power switch transistor is off. If the control end is directly connected to the sampling end, the problem of pulling down the voltage of the sampling end may occur, thereby affecting implementation of the original functions of the control circuit of the switching power supply. However, the unidirectionally conductive temperature measurement circuit used in the present application can effectively solve this problem, and can prevent the current from flowing reversely from the sampling end back to the control end (the positive current direction is the direction of current flow) while the power switch is off, so that normal function implementation of the switching power supply is not affected, thereby achieving the objective of reusing existing pins of the control circuit and introducing the overtemperature protection function. That is, precise overtemperature protection can still be achieved by means of an external NTC resistor without changing the existing six-pin package of the control circuit of the switching power supply, thereby better meeting requirements of actual applications of power adapters.

BRIEF DESCRIPTION OF THE DRAWINGS

In order to more clearly describe the embodiments of the present application, accompanying drawings to be used in the embodiments are briefly introduced below. Obviously, the accompanying drawings in the following description are merely some of the embodiments of the present application. Those of ordinary skill in the art can further obtain other accompanying drawings according to these accompanying drawings without involving inventive skill.

FIG. 1 is a structural diagram of a common external NTC overtemperature protection system;

FIG. 2 is a structural diagram of an external NTC overtemperature protection system provided in the present invention;

FIG. 3 is a diagram of an overtemperature protection circuit implemented on the basis of a current comparator provided in the present invention;

FIG. 4 is a diagram of an overtemperature protection circuit implemented on the basis of a voltage comparator provided in the present invention;

FIG. 5 is a signal waveform diagram of an overtemperature protection circuit provided in the present invention;

FIG. 6 is a diagram of another overtemperature protection circuit implemented on the basis of a current comparator provided in the present invention;

FIG. 7 is a diagram of another overtemperature protection circuit implemented on the basis of a voltage comparator provided in the present invention;

FIG. 8 is a schematic diagram of a switch configuration of an overtemperature protection circuit based on a current comparator provided in the present invention;

FIG. 9 is a schematic diagram of a switch configuration of an overtemperature protection circuit based on a voltage comparator provided in the present invention;

FIG. 10 is a schematic diagram of a switch configuration of another overtemperature protection circuit based on a current comparator provided in the present invention; and

FIG. 11 is a schematic diagram of a switch configuration of another overtemperature protection circuit based on a voltage comparator provided in the present invention.

DETAILED DESCRIPTION OF THE EMBODIMENTS

The technical solutions in the embodiments of the present application are clearly and completely described below with reference to the accompanying drawings in the embodiments of the present application. It is apparent that the described embodiments are merely some, rather than all, of the embodiments of the present application. On the basis of the embodiments in the present application, all other embodiments obtained by those of ordinary skill in the art without involving inventive skill fall within the scope of protection of the present application.

The core of the present application provides an overtemperature protection circuit.

In order to enable those in the art to better understand the solution of the present application, the present application is described in further detail below with reference to the accompanying drawings and specific embodiments.

In an application of a current power adapter, a power supply system constructed on the basis of SSR flyback architecture is shown in FIG. 1. In order to achieve precise overtemperature protection, an external NTC resistor typically needs to be connected to a PWM controller, so that the PWM controller can monitor the system temperature by measuring changes in the resistance value of the NTC resistor, thereby implement an overtemperature protection function.

Considering that the design of the switching power supply system based on the SSR flyback architecture as shown in FIG. 1 is relatively mature and that each existing pin of the PWM controller has its own respective function, in order to not affect the implementation of the existing functions, a currently typical method is used in which another pin is connected to the NTC resistor to measure changes in the resistance value, as shown in FIG. 1, and the another pin that needs to be added is an RT end. That is, in the implementation of an existing external NTC overtemperature protection solution shown in FIG. 1, only the additional pin, i.e., the RT end, from the PWM controller and the circuit portion of the NTC resistor connected to the RT end are the circuit portions that need to be added to implement the overtemperature protection function, and the rest are all existing circuit portions of the system for implementing the functions thereof, and are therefore not described herein again in the present embodiment.

However, in some particular application scenarios, requirements on the number of pins of the PWM controller are strict. For example, for the PWM controller in the case of the six-pin package (SOT23-6), the existing six pins in this case have respective functions to implement, and no idle pin can be used to measure the resistance value of an external NTC resistor, so that it is not easy to implement the overtemperature protection function.

Therefore, to solve the above problem, the present application provides an overtemperature protection circuit, as shown in FIG. 2, including:

a control circuit (which may be a PWM controller for performing controlling in an existing switching power supply), coupled to a power switch (M120), and used to control, by means of a control end (i.e., a GATE end of the PWM controller), the on and off of the power switch, the control circuit having a sampling end (i.e., a DEMG end of the PWM controller) for sampling a demagnetization signal of the switching power supply; and

a temperature measurement circuit, coupled between the control end and the sampling end, wherein according to current requirements typically used for implementing the overtemperature protection function, the temperature measurement circuit at least should include, as shown in **FIG.** 2, an overtemperature protection resistor (i.e., an NTC resistor), the resistance value of which varies with changes in temperature, so that when a potential difference is applied to two ends of the overtemperature protection resistor, the current ambient temperature of the switching power supply can be determined according to a change in a current flowing through the overtemperature protection resistor;

while the power switch is on, the control circuit clamps voltages of the control end and the sampling end and forms a potential difference, thereby performing overtemperature protection on the switching power supply by means of a change in a current flowing through the temperature measurement circuit, and

while the power switch is off, the current direction of the temperature measurement circuit is unidirectional from the control end to the sampling end (the positive current direction is the direction of current flow).

It should be noted that, for the above-described temperature measurement circuit, a temperature measurement function may be implemented by the overtemperature protection resistor. Unidirectional conduction of the temperature measurement circuit may be achieved by means of a diode in a possible embodiment, as shown in FIG. 2. Specifically, the above-described temperature measurement circuit includes: an overtemperature protection resistor R_NTC and a diode D105.

The overtemperature protection resistor R_NTC and the diode D105 are coupled in series between the control end and the sampling end.

The direction of current flow is from a first end connected in series and a second end connected in series.

The first end connected in series is connected to the control end, and the second end connected in series is connected to the sampling end.

It should also be noted that the present embodiment does not impose any limitations on the order in which the overtemperature protection resistor R_NTC and the diode D105 are connected in series, and the overtemperature protection resistor R_NTC may be connected in series to a positive electrode of the diode D105 or may be connected in series to a negative electrode of the diode D105. FIG. 2 shows merely one possible example, and the same function can still be implemented if the positions of the overtemperature protection resistor R_NTC and the diode D105 in FIG. 2 are interchanged (the connection correspondence between the positive electrode and the negative electrode of the diode D105 and two ports of the PWM controller are unchangeable, and the positive electrode of the diode D105 needs to be correspondingly connected to the GATE end).

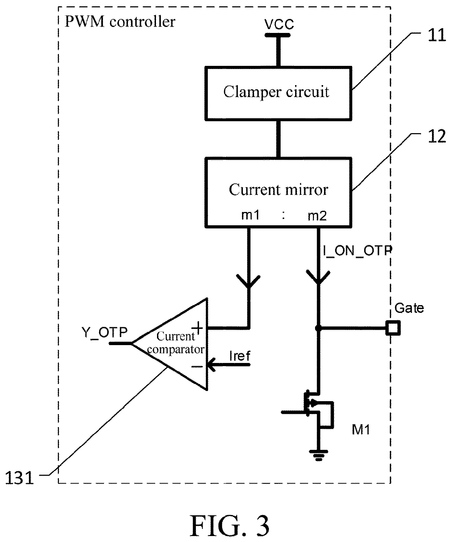

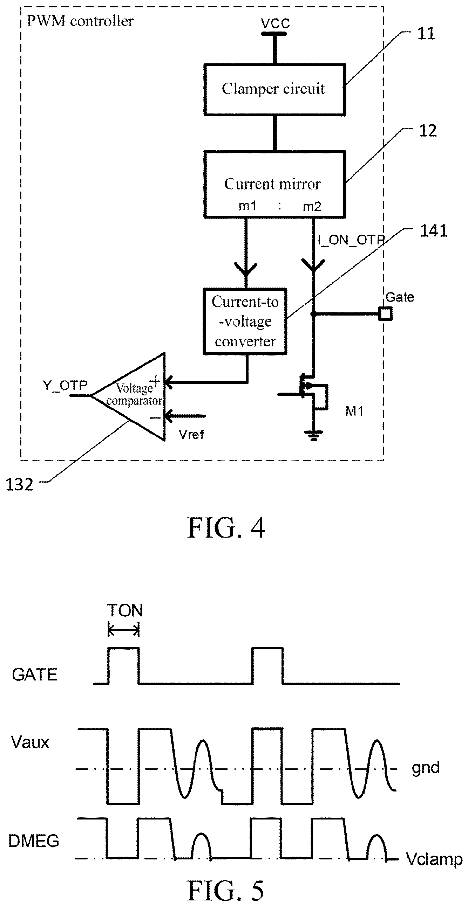

The control circuit in the switching power supply is the PWM controller, and as shown in FIG. 3 and FIG. 4, includes: a clamper circuit 11, a current mirror 12, a comparator, and a pull-down transistor M1.

An input end of the clamper circuit 11 is connected to a positive electrode VCC of a power supply, and an output end of the clamper circuit 11 is connected to an input end of the current mirror 12. The clamper circuit 11 is used to clamp a high level of the GATE end to a set fixed voltage value VGATE_H greater than zero.

A first output end of the current mirror 12 is grounded by means of the pull-down transistor M1 and is connected to the GATE end, and a second output end of the current mirror 12 is connected to an input end of the comparator. The comparator is used to output a corresponding overtemperature protection signal according to the magnitude relationship between a current value input by the current mirror 12 and a preset threshold.

It should be noted that devices included in the above-described control circuit and the connection relationships therebetween are circuit portions newly added to an existing control circuit (the PWM controller) to implement the overtemperature protection function. That is, the control circuit in the present application not only includes the clamper circuit 11, the current mirror 12, the comparator, and the pull-down transistor M1, but should also include circuit configurations that existing control circuits should have to implement their own functions.

That is, improvements to the original power supply system having the power switch that are made in the present embodiment to implement the overtemperature protection function of the external NTC resistor may be divided into two parts. One part is improvements not related to the control circuit, and as shown in FIG. 2 in detail, is: the overtemperature protection resistor R_NTC and the diode D105 are provided between the DEMG end and the GATE end, and the positive electrode of the diode D105 is correspondingly connected to the GATE end to prevent the DEMG end from pulling down the voltage of the GATE end. The other part is internal improvements made to the control circuit, and as shown in FIG. 3 and FIG. 4 in detail, is: the clamper circuit 11, the current mirror 12, the comparator, and the pull-down transistor M1 are provided to enable a PWM control chip to measure changes in the resistance value of the overtemperature protection resistor R_NTC to thereby acquire information about the current temperature of the system, so as to determine whether overheating as occurred, whether a protective action needs to be performed, and so on. The above-described improvements are all made to a circuit of the original system without an external NTC overtemperature protection function, and are additionally added improvements, and the present application does not need to modify or delete the original circuit portion of the system.

In addition, for two outputs of the current mirror 12, a first output corresponding to the first output end of the current mirror 12 connected to the GATE end is a current signal actually flowing through the overtemperature protection resistor R_NTC, and a second output of the current mirror 12 connected to the comparator is another current signal proportional to an NTC current signal, wherein the proportional relationship m1:m2 may be determined according to actual requirements. However, in actual applications, to meet control requirements and reduce power consumption, output is typically performed at a ratio of m1:m2 = 1:10, or m1:m2 = 1:100, or the like.

It should also be noted that the circuit configurations shown in FIG. 3 and FIG. 4 are merely examples in which the comparator is respectively a current comparator 131 and a voltage comparator 132. When the comparator is a device that has a comparison function other than the current comparator 131 and the voltage comparator 132, when the input and output of the comparator are determined, how to adaptively adjust the circuit configurations could easily be achieved by those in art, and thus details will not be described again in the present embodiment. For example, an input signal that can be identified by the voltage comparator 132 needs to be a voltage signal, but a signal output by the current mirror 12 is a current signal, therefore as shown in FIG. 4, a current-to-voltage converter is further needed to convert the current signal output by the current mirror 12 into a voltage signal for inputting into the voltage comparator 132.

In addition, when the comparator is the current comparator 131, the circuit portion newly added in the control circuit and used to achieve overtemperature protection is shown in FIG. 3. The second output end of the current mirror 12 is connected to a first input end of the current comparator 131, and the preset threshold is a reference current value Iref and is input into a second input end of the current comparator 131.

When the comparator is the voltage comparator 132, the circuit portion newly added in the control circuit and used to achieve overtemperature protection is shown in FIG. 4, and the control circuit further includes a current-to-voltage converter 141. The second output end of the current mirror 12 is connected to a first input end of the voltage comparator 132 by means of the current-to-voltage converter 141, and the preset threshold is a reference voltage value Vref and is input to a second input end of the voltage comparator 132.

Furthermore, to clearly describe the working principle of the overtemperature protection circuit provided in the present application, description is provided below with reference to the signal waveform diagram in FIG. 5:

for an existing PWM controller of the six-pin package, the DEMG end of pins thereof has a negative clamping function. That is, when the PWM controller is heavily loaded (i.e., in a TON period, or while the power switch of the switching power supply is on), an output voltage of the DEMG end is negative and is clamped to a set fixed value Vclamp. The fixed value Vclamp is adjustable, and in actual applications, Vclamp is typically set to a voltage value of 0 or close to 0. Therefore, the output voltage of the DEMG end is as shown in FIG. 5, and the value of the output voltage of the DEMG section is 0 in the TON period.

It can be seen from the above-described circuit configurations that the overtemperature protection resistor R_NTC is connected in series between the DEMG end and the GATE end. That is, when a potential difference is present between output voltages of the DEMG end and the GATE end, a potential difference is present between two ends of the overtemperature protection resistor R_NTC, and a current flows through the overtemperature protection resistor R_NTC. The current temperature can be determined by measuring the value of the current. For a current signal that needs to be monitored, an expression is as follows:

$$I\_NTC = (VGATE-VDEMG)/R\_NTC,$$

where I_NTC is the current value of the current signal flowing through the overtemperature protection resistor R_NTC, VGATE is the output voltage of the GATE end, VDEMG is the output voltage of the DEMG end, and R_NTC in the expression refers in particular to the resistance value of the NTC resistor.

As can be seen from the above description and FIG. 5, in the TON period, because the DEMG end has the negative clamping function, the output voltage thereof is clamped to a fixed value (typically 0). Further, as can be seen from the above-described overtemperature protection circuit provided in the present application, the output of the GATE end is also clamped by the clamper circuit 11 to another fixed voltage value VGATE_H greater than zero, as show in FIG. 5, and so VGATE and VDEMG in the above-described current signal expression are determined, and there is only one variable, i.e., R_NTC. That is, the above-described current signal expression is:

$$I\_ON\_OTP = (VGATE\_H\text{-}Vclamp)/R\_NTC,$$

where I_ON_OTP is the value of the current passing through the overtemperature protection resistor R_NTC in the TON period, VGATE_H is a fixed voltage value greater than zero, and Vclamp is a fixed voltage value equal to or close to zero.

The comparator may determine the current system temperature by measuring the current signal in the TON period. It is determined whether overtemperature occurs. Determination of whether overtemperature occurs is related to the above-described preset threshold, thereby achieving overtemperature protection.

It should also therefore be noted that the example of the preset threshold should depend on selection of the comparator. When the comparator is the voltage comparator 132, the voltage comparator 132 outputs a corresponding signal by comparing the magnitude of the voltage values input at the two input ends, and in this case, the preset threshold should be implemented as a voltage input having a fixed voltage value, and may be implemented by means of a reference voltage provided by a reference voltage source. The value of the reference voltage is the preset threshold. By the same reasoning, the same is true when the comparator is the current comparator 131, the preset threshold may be achieved by a reference current provided by a reference current source. When the comparator is implemented as a more complex device, e.g., a processor having a certain data processing capability, the preset threshold may also be data prestored in the processor. When the processor acquires a current signal (an acquisition circuit may convert the current signal into a digital signal), it is determined, by means of comparison with the preset threshold, whether overheating is currently occurring in the system, and a corresponding overtemperature protection signal is output.

Furthermore, because the overtemperature protection circuit provided in the present application achieves overtemperature protection by measuring changes in the current caused by changes in the resistance value of the overtemperature protection resistor R_NTC in the TON period, because the feature that the DEMG end is originally negatively clamped in the TON period is utilized, and because the direction of current flow is restricted by means of unidirectional conduction of the diode D105, the voltage of DEMG is prevented from being reversely pulled down when the voltage of the GATE end decreases or even becomes a negative value while the power switch is off. That is, the effect of the connection of the DEMG end and the GATE end is eliminated, and implementation of functions such as original line voltage sampling (line compensation), output voltage (Vout OVP/UVP) sampling, etc., is not affected, thereby achieving reuse of pins.

In the overtemperature protection circuit provided in the present application, the current of the overtemperature protection resistor R_NTC is measured by reusing a pin of the existing PWM controller, and current measurement is performed in the TON period. In one aspect, the clamper circuit 11 is provided, so that a change in the current depends only on a change in the NTC resistance value. That is, requirements on measurement of the overtemperature protection function are met. In another aspect, the diode D105 is provided, so that the current between the GATE end and the DEMG end is unidirectional, thereby avoiding a situation in which the GATE end pulls down the voltage of the DEMG end while the power switch is off. Implementation of the existing function of the reused pin is not adversely affected, thereby better meeting requirements on implementation of external NTC overtemperature protection of a power adapter.

Furthermore, in actual applications of the power adapter, the voltage of the positive electrode (VCC) of the power supply of some systems in actual applications is not invariable. In a lightly loaded state or certain output voltage ranges, the VCC voltage is relatively low. As in the above-described expression of the monitored current signal, if VCC < VGATE_H, then the change in the current value of I_ON_OTP is small, and monitored I_ON_OTP is not accurate, so that a precise overtemperature protection function cannot be implemented.

To solve the above problem, the present embodiment further provides a preferred implementation: the preset threshold is positively related to a voltage value of the positive electrode of the power supply.

The preset threshold is caused to vary with changes to the voltage of the positive electrode of the power supply, so that even when the system is lightly loaded or the VCC voltage decreases, the comparator can also perform comparison on the currently monitored current signal I_ON_OTP according to the preset threshold that also decreases, so as to determine whether overheating has occurred, thereby achieving precise overtemperature protection.

Specifically, regarding how to achieve the preset threshold being positively related to the voltage value of the positive electrode of the power supply, the present embodiment provides further description with reference to above-described embodiments in which the comparator is respectively the current comparator 131 and the voltage comparator 132:

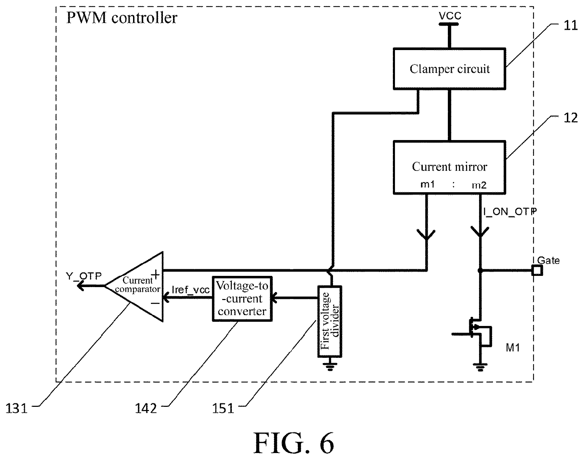

As shown in FIG. 6, corresponding to the comparator being the current comparator 131, in this case, an output may be additionally acquired from the clamper circuit 11 and grounded by means of a first voltage divider 151 so as to perform voltage division. A branch voltage output by the first voltage divider 151 is converted into a current signal by means of a voltage-to-current converter 142, and the current signal is then input to the second input end of the current comparator 131, so as to facilitate being used as a reference value to be compared with the current signal I_ON_OTP to determine whether overheating has occurred.

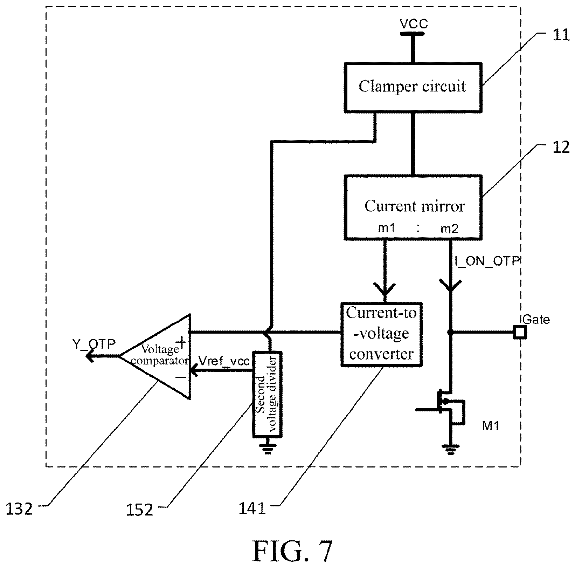

When the comparator is the voltage comparator 132, the preset threshold is caused to be positively related to the voltage of the positive electrode of the power supply, and as shown in FIG. 7, another output of the clamper circuit 11 is likewise acquired and subjected to voltage division by means of a second voltage divider 152. The comparator is the voltage comparator 132, and so a voltage resulting from the division can be directly input to the second input end of the voltage comparator 132 as a reference voltage to participate in determination and control of overtemperature protection.

It should be noted that the present embodiment does not impose any limitations on whether the first input end and the second input end of the comparator of the above-described embodiment correspond to a positive-phase input end or a negative-phase input end of the voltage comparator 132 or the current comparator 131. As can be seen from the working principle of the voltage comparator 132 and the current comparator 131, when the magnitude relationship between input signals of the positive-phase input end and the negative-phase input end of the comparator changes, the output of the comparator reverses, and so the correspondence between the first and second input ends and the positive-phase and negative-phase input ends should be determined according to signal control logic that performs overtemperature protection according to the output signal of the comparator.

In the preferred solution provided in the present embodiment, a relative change between the two input ends of the comparator is achieved by causing the preset threshold of the comparator to be positively related to the voltage of the positive electrode of the power supply. When the measured current value of the overtemperature protection resistor R_NTC decreases because the voltage of the power supply decreases, the preset threshold acting as the reference for comparison can adaptively decrease accordingly, thereby reducing the effect of changes in the voltage of the power supply of the system on the determination of overtemperature protection, and improving the accuracy of overtemperature protection, i.e., achieving more precise overtemperature protection.

As can be seen from the above description, external NTC overtemperature protection in the case of the existing six-pin package can be achieved by means of the implementation provided in the above-described embodiment, and an existing pin is reused without affecting the implementation of the function thereof. Further still, during actual implementation, those who are skilled generally hope that the above-described overtemperature protection circuit does not incur overly high additional power consumption to the system. On that basis, further provided in the present embodiment is a preferred implementation. The above-described overtemperature protection circuit further includes: a switch for controlling whether the temperature measurement circuit operates.

In the present embodiment, the switch may be provided on a main line of the temperature measurement circuit or on either one among voltage supplies of the two ends of the temperature measurement circuit for providing potential difference, so as to control the on and off of the circuit. When the switch is off, the current flowing through the overtemperature protection resistor R_NTC is not measured, thereby reducing overall power consumption. However, the present embodiment does not impose any limitations on the number of switches and the position of the switch on the overtemperature protection circuit. The above-described embodiment has clearly described the circuit configurations and working principle of the overtemperature protection circuit, and those skilled in the art can provide a switch accordingly to control whether the entire circuit operates. However, for the position of the above-described switch, specifically in the present embodiment, the switch is preferably provided on the side of the high level provided by the potential difference. That is, several possible implementations are provided for output control of the voltage of the control end:

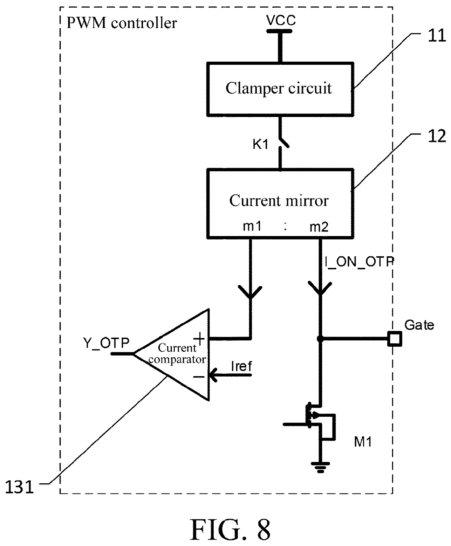

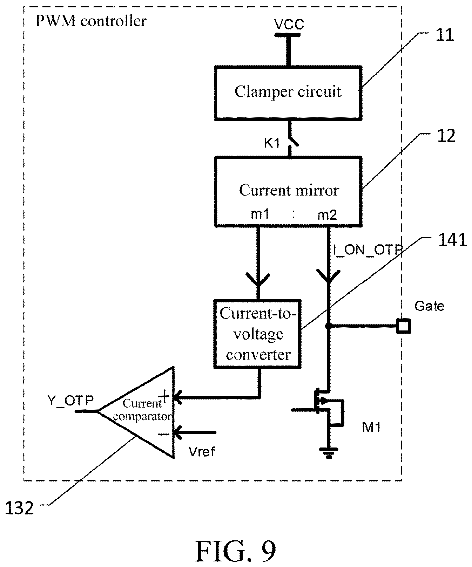

1. As shown in FIG. 8 and FIG. 9, the switch may be a first switch K1 provided between the clamper circuit 11 and the current mirror 12. FIG. 8 corresponds to a situation in which the comparator is the current comparator 131. FIG. 9 corresponds to a situation in which the comparator is the voltage comparator 132.

It is easily understood that the above-described measurement of changes in the resistance value of the overtemperature protection resistor R_NTC is performed by outputting a high voltage at the GATE end, and DEMG outputs a zero voltage to achieve the potential difference between the two ends of the overtemperature protection resistor R_NTC, thereby generating a current. The current value is measured to determine whether overheating has occurred. Therefore, when the first switch K1 is off as shown in FIG. 8, no voltage is input to the current mirror 12, which is equivalent to a path in which the overtemperature protection resistor R_NTC is located is cut off, that is, the current I_ON_OTP is cut off, thereby reducing system power consumption.

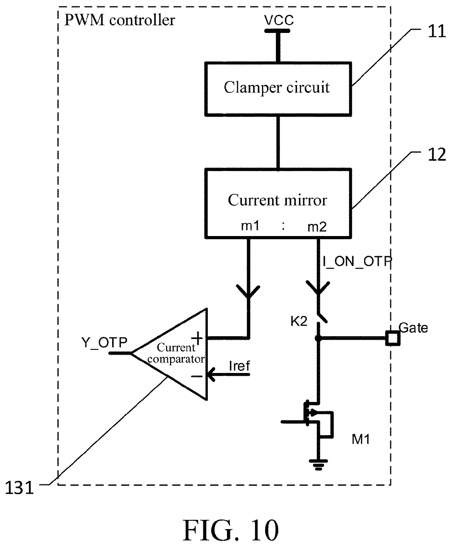

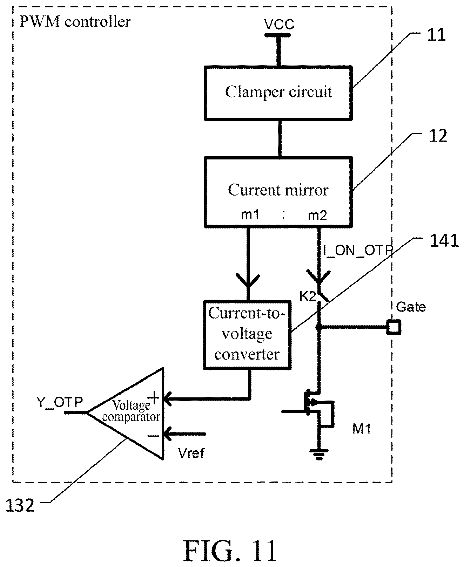

2. As shown in FIG. 10 and FIG. 11, the switch may be a second switch K2 provided between the second output end of the current mirror 12 and the pull-down transistor M1 and the GATE end. FIG. 10 corresponds to a situation in which the comparator is the current comparator 131. FIG. 11 corresponds to a situation in which the comparator is the voltage comparator 132.

Similar to the above-described first switch K1, the second switch K2 can likewise function to cut off the current I_ON_OTP to thereby turn off the circuit when the current I_ON_OTP does not need to be measured, so as to reduce system power consumption.

It should be noted that the above-described first switch K1 and the above-described second switch K2 are merely for distinguishing between two different switch positions, and do not mean that limitations are imposed on differences between the first switch K1 and the second switch K2 in the selection of switch types and specifications. In addition, the two switch positions of the above-described first switch K1 and the above-described second switch K2 are merely two possible examples, and do not mean that there are only these two examples. In addition, no limitations are imposed on the number of the above-described switches, and a plurality of switches may be redundantly provided in different positions or the same position. For example, the above-described first switch K1 and the above-described second switch K2 are both provided to ensure the effect of reducing power consumption. The present embodiment imposes no limitations on this.

For control of the on and off of the above-described switches, it can be seen from the above-described embodiment that, in the present application, changes in the resistance value of the overtemperature protection resistor R_NTC is determined by measuring the current flowing therethrough when the system is in the TON period, so for a moment outside of the TON period, current measurement does not need to be performed, and the switches may be turned off to reduce power consumption.

Furthermore, the current signal I_ON_OTP does not need to be measured throughout the entire TON period. The current signal I_ON_OTP may be measured continuously according to requirements on measurement precision to cause the comparator to reach a certain number of comparisons, and then the switch is turned off, so that the system power consumption is further reduced while ensuring that the overtemperature protection function is precisely implemented, and power consumption additionally incurred by the overtemperature protection circuit is negligible with respect to the entire power adapter system. In addition, for control of the turning off of the switch in the above-described TON period, the switch may be turned off in the latter half of the TON period, or the switch is periodically turned on in the TON period to measure the current signal I_ON_OTP, and is turned off for the rest of the time. The present embodiment imposes no limitations on this.

In the preferred solution provided in the present embodiment, the switch is provided to control whether the entire overtemperature protection circuit operates, so that the overtemperature protection circuit is turned off when not needed, thereby preventing operation thereof from incurring unnecessary loss to the system. Further, the overtemperature protection function is implemented on the premise that changes in the resistance value of the overtemperature protection resistor R_NTC are measured, and the above-described measurement process occurs in the TON period of the system, therefore the overtemperature protection circuit can be turned off by means of the switch in any non-TON period. During the TON period, the overtemperature protection circuit may also be selectively turned off according to requirements such as actual protection precision at certain moments or periods, or the overtemperature protection circuit is turned on according to a preset period interval, so as to further reduce power consumption, thereby finally achieving the effect of causing power consumption incurred by the overtemperature protection circuit to be negligible with respect to the entire power adapter system. In addition, further provided in the present embodiment is a preferred solution of configurations of the above-described switch. Specifically, whether the current signal I_ON_OTP of the GATE end is off is controlled to control whether the entire circuit operates. For the configurations of the switch, a plurality of redundant switches may be provided in the same or different positions to achieve a more stable control effect, thereby better ensuring that system power consumption is reduced.

In addition, for implementation of the overtemperature protection function, a corresponding temperature protection point needs to be determined. The setting of the temperature protection point should be determined comprehensively according to factors such as a parameter of the overtemperature protection resistor R_NTC, the preset threshold, the output ratio m1:m2 of the current mirror 12, etc. Considering that the preset threshold is typically implemented by a reference source, the reference source and the current mirror 12 are both provided inside the PWM controller, and are relatively difficult to adjust. Further, although the overtemperature protection resistor R_NTC is provided outside the PWM control chip and is connected externally, however it is not easy to adjust the temperature protection point by means of the overtemperature protection resistor R_NTC. Therefore, in view of this, provided in the present embodiment is a preferred implementation. As shown in FIG. 2, the overtemperature protection circuit further includes: a resistor R122 connected in series in a loop in which the overtemperature protection resistor R_NTC and the diode D105 are located.

The resistor added in the present embodiment is a resistor for adjusting the temperature protection point. Such a temperature protection point adjustment method in which resistors of different resistance values are connected in series, according to requirements of different temperature protection points, in the loop in which the overtemperature protection resistor R_NTC and the diode D105 are located is easier to implement than a method of adjusting a circuit and device inside the PWM controller chip or a method of adjusting the overtemperature protection resistor R_NTC, and costs are easier to control, thereby better meeting requirements of actual applications.

The overtemperature protection circuit is described in detail in the above-described embodiment. The present application further provides an embodiment corresponding to a control circuit of a switching power supply. As described in the above-described embodiment of the overtemperature protection circuit, the main improvements made to a control circuit of a switching power supply provided in the present embodiment may also be divided two parts, i.e., the internal part and the external part. The basis for distinguishing between the internal part and the external part is whether the improvement is integrated in the form of a chip or the like in the control circuit. Specifically, the above-described control circuit includes:

a control end (i.e., the above-described GATE end), coupled to a power switch, and used to control the on and off of the power switch;

a sampling end (i.e., the above-described DEMG end), used to sample a demagnetization signal of a switching power supply;

a temperature measurement circuit, coupled between the control end and the sampling end, the current direction being unidirectional from the control end to the sampling end;

a clamper circuit, used to clamp, while the power switch is on, voltages of the control end and the sampling end and form a potential difference; and

a comparator circuit, used to determine the magnitude relationship between a current flowing through the temperature measurement circuit and a preset threshold, and output an overtemperature protection signal used as a basis for triggering an overtemperature protection action.

The control end and the sampling end are pins of the control circuit integrated in the form of a chip or the like (e.g., a PWM controller), and are used to be connected to other circuit portions in the switching power supply, so as to implement basic functions of the control circuit. As shown in FIG. 2, the control end is used to control the on and off of a power switch M120 coupled thereto, and the sampling end is used to sample a demagnetization signal of the switching power supply. The above-described control end and sampling end and the temperature measurement circuit are all improvements outside a control circuit chip, and may also be regarded as a portion of the control circuit, and can be implemented as an external circuit. The above-described clamper circuit and comparator circuit are integrated in the control circuit chip.

It should be noted that the PWM controller used in the switching power supply in which the above-described embodiment is located is used as the above-described control circuit, and the sampling end thereof has a clamping function. When the PWM controller is in a heavily loaded state or in a period in which the power switch of the switching power supply is on, the sampling end has a negative clamping function. In actual applications, the voltage of the sampling end is typically clamped to a voltage value of 0 V or close to 0 V. A potential difference needs to be present between the above-described sampling end and control end to meet requirements of overtemperature protection, and the direction of current flow is specified to prevent the implementation of original functions of the control circuit from being affected, so that the voltage output of the control end is typically set to a high level, and the direction of current flow of the temperature measurement circuit is typically set to be from the control end to the sampling end.

Other embodiments of the control circuit portion of a switching power supply provided in the present embodiment and embodiments of the above-described overtemperature protection circuit portion correspond to each other, therefore for the embodiments of the control circuit portion, please refer to the description of the embodiments of the above-described overtemperature protection circuit portion. Details will not be described herein again.

In the control circuit of a switching power supply provided in the present embodiment, the control end and the sampling end of existing pins are reused, and a temperature measurement circuit is coupled therebetween. The temperature measurement circuit may be implemented by an external NTC resistor according to actual overtemperature protection requirements. When the ambient temperature around the switching power supply changes, the resistance value of the NTC resistor also changes accordingly. The output voltages of the control end and the sampling end are clamped by means of the clamper circuit while the power switch is on. In order to ensure that the power switch is on, the voltage of the control end is clamped to a high level. The sampling end of an existing control circuit, such as a PWM controller, typically has a negative clamping function while the power switch is on, and so a potential difference is formed between the two ends, and a current flows through the temperature measurement circuit. The magnitude relationship between the current flowing through the temperature measurement circuit and the preset threshold is compared by means of the comparator circuit, thereby implementing the overtemperature protection function. By means of the overtemperature protection function implemented by the present embodiment, the external NTC overtemperature protection function is introduced without adding any pins. In addition, the overtemperature protection function operates while the power switch of the switching power supply is on, and unidirectional conduction of the temperature measurement circuit prevents the current from reversing (it is specified that the direction of flow of the positive current is the current direction, and the current is prevented from flowing reversely from the sampling end to the control end) while the power switch is off, thereby preventing the implementation of the original function of the sampling end from being affected. In summary, by means of the control circuit provided in the present embodiment, existing pins are reused to introduce the external NTC overtemperature protection function without affecting the implementation of the original functions of the control circuit, thereby better meeting requirements of actual application scenarios.

In addition to the above-described overtemperature protection circuit and the above-described control circuit of a switching power supply having corresponding features, also described in the present application is an overtemperature protection method of a switching power supply, including:

while a power switch is on, clamping the voltage of a control end of a control circuit of a switching power supply to a first set value, and clamping the voltage of a sampling end of the control circuit to a second set value, wherein the first set value is greater than the second set value; and
determining, by acquiring a change in the current in a temperature measurement circuit coupled between the control end and the sampling end, a current ambient temperature of the switching power supply, so as to facilitate carrying out overtemperature protection on the switching power supply,
wherein the magnitude of a current flowing through the temperature measurement circuit varies with changes in temperature, and while the power switch is on or off, the current direction is unidirectional from the control end to the sampling end.

For hardware implementation of the above-described method, reference may be made to the embodiments of the above-described overtemperature protection circuit portion for details (the embodiment of the control circuit portion and the embodiment of the overtemperature protection circuit portion have the same or corresponding technical features), and details will not be described herein again in the present embodiment.

In a preferred example, the above-described method further includes:
cutting off voltage output of the control end within a partial time period while the power switch is on.

In another preferred example, the above-described method further includes:
while the power switch is on, allowing voltage output of the control end at a preset period interval.

For the overtemperature protection control of the two described preferred embodiments, the objective thereof is to reduce unnecessary loss incurred by the overtemperature protection circuit. As can be seen from the above embodiments of the circuit portion, the overtemperature protection function is implemented in the TON period, that is, while the power switch of the switching power supply is on. However, depending on different requirements of actual applications, temperature measurement does not need to be performed throughout the entire TON period to perform overtemperature protection, and therefore the above-described overtemperature protection function is enabled and disabled by means of the switch that is disclosed in the embodiment of the circuit portion and that is used to control whether the temperature measurement circuit operates. Specifically, whether to output the high-level voltage at the control end is controlled to achieve the objective of energy conservation.

In the overtemperature protection method of a switching power supply, the sampling end and the control end of existing pins of the control circuit of the switching power supply are used, and the output voltages thereof are clamped while the power switch is on, so that in one aspect, a potential difference is formed to be used by the temperature measurement circuit, and in another aspect, normal function implementation of the control circuit is not affected. In addition, the above-described temperature measurement circuit has unidirectional conductivity. When the power switch is in the off state, the current does not flow reversely, so that the voltage of the control end is prevented from pulling down the voltage of the sampling end, thereby avoiding normal function implementation thereof. In summary, by means of the overtemperature protection method, the existing pins can be used to implement the external NTC overtemperature protection function without affecting the implementation of the existing functions of the control circuit, thereby better meeting requirements of circuit protection of actual switching power supplies. In addition, several preferred implementations may further be provided. Supply of the high-level voltage of the overtemperature protection function (i.e., the voltage output of the control end) is controlled, so as to reduce energy consumption.

The control circuit for use in a switching power supply provided in the present application is described above in detail. The embodiments in the specification are described in a progressive manner. Each of the embodiments focuses on differences from other embodiments, and for identical or similar parts between the embodiments, reference may be made to each other. The apparatus disclosed in the embodiments is described briefly because the apparatus corresponds to the method disclosed, and for related parts, reference may be made to the description of the method. It should be pointed out that those of ordinary skill in the art can further make several improvements and modifications to the present application without departing from the principle of the present application, and the improvements and modifications also fall within the scope of protection of the claims of the present application.

It should also be noted that in the present specification, relational terms such as first, second, etc., are merely used to distinguish an entity or operation from another entity or operation, and it is not necessarily required or implicated that any such actual relationship or order is present between these entities or operations. In addition, the term "include," "comprise," or any other variation thereof is intended to encompass a non-exclusive inclusion, so that a process, method, article, or device that includes a series of elements includes not only those elements but also other elements not explicitly listed, or elements that are inherent to such a process, method, article, or device. The element defined by the statement "including one ...", when without further limitation, does not preclude the presence of additional identical elements in the process, method, article, or device that includes the element.

**Claims**

1. A control circuit for use in a switching power supply, the switching power supply having a power switch (M120), the control circuit comprising:

   a control end (GATE) coupleable to the power switch, and for controlling the on and off of the power switch; and
   a sampling end (DEMG) for sampling a demagnetization signal of the switching power supply;
   wherein the control circuit further comprises:

   a temperature measurement circuit (D105, R_NTC, R122) coupled between the control end and the sampling end, wherein the temperature measurement circuit is configured to be unidirectionally conductive by only allowing a current flow from the control end (GATE) to the sampling end (DEMG);
   a clamper circuit (11) configured to clamp, during a period for turning the power switch on, voltages of the control end and the sampling end and to form a potential difference; and
   a comparator circuit configured to compare the magnitude relationship between a current (I_ON_OTP) flowing through the temperature measurement circuit and a preset threshold (Iref; Vref), and to output an overtemperature protection signal (Y_OTP) for use by the control circuit as a basis for triggering an overtemperature protection action.

2. The control circuit according to claim 1, wherein:

   the comparator circuit comprises: a current mirror (12), a comparator (131; 132), and a pull-down transistor (M1);

an input end of the clamper circuit is configured to be connected to a positive electrode of a power supply and an output end of the clamper circuit is connected to an input end of the current mirror;
a first output end of the current mirror is grounded by means of the pull-down transistor, and is connected to the control end, and a second output end of the current mirror is connected to an input end of the comparator; and
the comparator (131; 132) is configured to output the overtemperature protection signal according to the magnitude relationship between a current value input by the current mirror and the preset threshold.

3. The control circuit according to claim 2, wherein the preset threshold is positively related to a voltage value of the positive electrode of the power supply, such that it varies with changes to the voltage of the positive electrode of the power supply.

4. The control circuit according to claim 2 or 3, wherein the comparator is a current comparator (131), and the second output end of the current mirror is connected to a first input end of the current comparator, the preset threshold being a reference current value (Iref), and being input to a second input end of the current comparator.

5. The control circuit according to claim 2 or 3, wherein the comparator is a voltage comparator (132), and

   the comparator circuit further comprises a current-to-voltage converter (141),
   the second output end of the current mirror being connected to a first input end of the voltage comparator by means of the current-to-voltage converter, and the preset threshold being a reference voltage value (Vref), and being input to a second input end of the voltage comparator.

6. The control circuit according to claim 4, wherein the comparator circuit further comprises a first voltage divider (151) and a voltage-to-current converter (142), and
   the output end of the clamper circuit is further connected to an input end of the voltage-to-current converter by means of the first voltage divider, an output end of the voltage-to-current converter being connected to the second input end of the current comparator, and being arranged a to provide the reference current value.

7. The control circuit according to claim 5, wherein the comparator circuit further comprises a second voltage divider (152), and
   the output end of the clamper circuit is further connected to the second input end of the voltage comparator by means of the second voltage divider, and is arranged to provide the reference voltage value.

8. The control circuit according to any preceding claim, further comprising: a switch for controlling whether the temperature measurement circuit operates.

9. The control circuit according to claim 8 as dependent from claim 2, wherein the switch is a first switch (K1) provided between the clamper circuit and the current mirror.

10. The control circuit according to claim 8 as dependent from claim 2, wherein the switch is a second switch (K2) provided between the second output end of the current mirror and the connection between the pull-down transistor and the control end.

**Patentansprüche**

1. Steuerschaltung zur Verwendung in einem Schaltnetzteil, wobei das zur Verwendung in einem Schaltnetzteil einen Leistungsschalter (M120) aufweist, wobei die Steuerschaltung umfasst:

   ein Steuerende (GATE), welches mit dem Leistungsschalter koppelbar ist, und zum Steuern des Ein und Aus des Leistungsschalters; und
   ein Abtastende (DEMG) zum Abtasten eines Entmagnetisierungssignals des Schaltnetzteils; wobei die Steuerschaltung weiter umfasst:

   eine Temperaturmessschaltung (D105, R_NTC, R122), welche zwischen dem Steuerende und dem Abtastende gekoppelt ist, wobei die Temperaturmessschaltung dazu konfiguriert ist, unidirektional leitfähig zu sein, indem sie nur einen Stromfluss von dem Steuerende (GATE) zu dem Abtastende (DEMG) zulässt;
   eine Klemmschaltung (11), die dazu konfiguriert ist, während einer Einschaltperiode des Leistungsschalters Spannungen des Steuerendes und des Abtastendes zu klemmen und eine Potentialdifferenz zu bilden; und
   eine Komparatorschaltung, die dazu konfiguriert ist, um die Größenbeziehung zwischen einem Strom (I_ON_OTP), der durch die Temperaturmessschaltung fließt, und einem voreingestellten Schwellenwert (Iref; Vref) zu vergleichen, und ein Übertemperaturschutzsignal (Y_OTP) zur Verwendung durch die Steuerschaltung als Basis zum Auslösen einer Übertemperaturschutzaktion auszugeben.

2. Steuerschaltung nach Anspruch 1, wobei:

   die Komparatorschaltung umfasst: einen Stromspiegel (12), einen Komparator (131; 132) und einen Pull-down-Transistor (M1);
   ein Eingangsende der Klemmschaltung dazu konfiguriert ist, mit einer positiven Elektrode eines Netzteils verbunden zu werden, und ein Ausgangsende der Klemmschaltung mit einem Eingangsende des Stromspiegels verbunden ist;
   ein erstes Ausgangsende des Stromspiegels mittels des Pull-down-Transistors geerdet ist und mit dem Steuerende verbunden ist, ein zweites Ausgangsende des Stromspiegels mit einem Eingangsende des Komparators verbunden ist; und
   der Komparator (131; 132) dazu konfiguriert ist, das Übertemperaturschutzsignal gemäß der Größenbeziehung zwischen einem von dem Stromspiegel eingegebenen Stromwert und einem voreingestellten Schwellenwert auszugeben.

3. Steuerschaltung nach Anspruch 2, wobei der voreingestellte Schwellenwert positiv mit einem Spannungswert der positiven Elektrode des Netzteils zusammenhängt, sodass er sich mit Änderungen der Spannung der positiven Elektrode des Netzteils ändert.

4. Steuerschaltung nach Anspruch 2 oder 3, wobei der Komparator ein Stromkomparator (131) ist, und das zweite Ausgangsende des Stromspiegels mit einem ersten Eingangsende des Stromkomparators verbunden ist, wobei der voreingestellte Schwellenwert ein Referenzstromwert (Iref) ist und in ein zweites Eingangsende des Stromkomparators eingegeben wird.

5. Steuerschaltung nach Anspruch 2 oder 3, wobei der Komparator ein Spannungskomparator (132) ist, und

   die Steuerschaltung weiter einen Strom-Spannungs-Wandler (141) umfasst,
   wobei das zweite Ausgangsende des Stromspiegels mittels des Strom-Spannungs-Wandlers mit einem ersten Eingangsende des Spannungskomparators verbunden ist, und der voreingestellte Schwellenwert ein Referenzspannungswert (Vref) ist und in ein zweites Eingangsende des Spannungskomparators eingegeben wird.

6. Steuerschaltung nach Anspruch 4, wobei die Komparatorschaltung weiter einen ersten Spannungsteiler (151) und einen Spannungs-Strom-Wandler (142) umfasst, und

das Ausgangsende der Klemmschaltung weiter mittels des ersten Spannungsteilers mit einem Eingangsende des Spannungs-Strom-Wandlers verbunden ist, wobei ein Ausgangsende des Spannungs-Strom-Wandlers mit dem zweiten Eingangsende des Stromkomparators verbunden ist und dazu angeordnet ist, den Referenzstromwert bereitzustellen.

7. Steuerschaltung nach Anspruch 5, wobei die Komparatorschaltung weiter einen zweiten Spannungsteiler (152) umfasst, und

das Ausgangsende der Klemmschaltung weiter mittels des zweiten Spannungsteilers mit dem zweiten Eingangsende des Spannungskomparators verbunden ist und dazu angeordnet ist, den Referenzspannungswert bereitzustellen.

8. Steuerschaltung nach einem vorstehenden Anspruch, weiter umfassend: einen Schalter zum Steuern, ob die Temperaturmessschaltung arbeitet.

9. Steuerschaltung nach Anspruch 8, abhängig von Anspruch 2, wobei der Schalter ein erster Schalter (K1) ist, welcher zwischen der Klemmschaltung und dem Stromspiegel bereitgestellt ist.

10. Steuerschaltung nach Anspruch 8, abhängig von Anspruch 2, wobei der Schalter ein zweiter Schalter (K2) ist, der zwischen dem zweiten Ausgangsende des Stromspiegels und dem Pull-down-Transistor und dem Steuerende bereitgestellt ist.

## Revendications

1. Circuit de commande destiné à être utilisé dans une alimentation électrique de commutation, l'alimentation électrique de commutation présentant un commutateur d'alimentation (M120), le circuit de commande comprenant :

une extrémité de commande (GATE) pouvant être couplée au commutateur d'alimentation et pour commander l'activation et la désactivation du commutateur d'alimentation ; et
une extrémité d'échantillonnage (DEMG) pour échantillonner un signal de démagnétisation de l'alimentation électrique de commutation ; dans lequel le circuit de commande comprend en outre :

un circuit de mesure de température (D105, R_NTC, R122) couplé entre l'extrémité de commande et l'extrémité d'échantillonnage, dans lequel le circuit de mesure de température est configuré pour être conducteur de manière unidirectionnelle en autorisant uniquement un flux de courant de l'extrémité de commande (GATE) à l'extrémité d'échantillonnage (DEMG) ;
un circuit de calage (11) configuré pour bloquer, lorsque le commutateur d'alimentation est allumé, les tensions de l'extrémité de commande et de l'extrémité d'échantillonnage et former une différence de potentiel ; et
un circuit comparateur, configuré pour comparer la relation d'amplitude entre un courant (I_ON_OTP) circulant dans le circuit de mesure de température et un seuil prédéfini (Iref ; Vref), et émettre un signal de protection contre la surchauffe (Y_OTP) utilisé par le circuit de commande comme base pour déclencher une action de protection contre la surchauffe.

2. Circuit de commande selon la revendication 1, dans lequel :

le circuit comparateur comprend : un miroir de courant (12), un comparateur (131 ; 132) et un transistor abaisseur (M1) ;
une extrémité d'entrée du circuit de calage est configurée pour être connectée à une électrode positive d'une alimentation électrique, et une extrémité de sortie du circuit de calage est connectée à une extrémité d'entrée du miroir de courant ;
une première extrémité de sortie du miroir de courant est mise à la terre au moyen du transistor abaisseur et est connectée à l'extrémité de commande, et une deuxième extrémité de sortie du miroir de courant est connectée à une extrémité d'entrée du comparateur ; et
le comparateur (131 ; 132) est utilisé pour émettre un signal de protection contre la surchauffe correspondant en fonction de la relation d'amplitude entre une valeur de courant entrée par le miroir de courant et un seuil prédéfini.

3. Circuit de commande selon la revendication 2, dans lequel le seuil prédéfini est positivement lié à une valeur de tension de l'électrode positive de l'alimentation électrique, de sorte qu'il varie en fonction des changements de tension de l'électrode positive de l'alimentation électrique.

4. Circuit de commande selon la revendication 2 ou 3, dans lequel le comparateur est un comparateur de courant (131), et
la deuxième extrémité de sortie du miroir de courant est connectée à une première extrémité d'entrée du comparateur de courant, le seuil prédéfini étant une valeur de courant de référence (Iref), et étant entré dans une deuxième extrémité d'entrée du comparateur de courant.

5. Circuit de commande selon la revendication 2 ou 3, dans lequel le comparateur est un comparateur de courant (132), et

le circuit de commande comprend en outre un convertisseur courant-tension (141),
la deuxième extrémité de sortie du miroir de courant étant connectée à une première extrémité d'entrée du comparateur de tension au moyen du convertisseur courant-tension, et le seuil prédéfini étant une valeur de tension de référence (Vref), et étant entré dans une deuxième extrémité d'entrée du comparateur de tension.

6. Circuit de commande selon la revendication 4, dans lequel le circuit de comparateur comprend en outre un premier diviseur de tension (151) et un convertisseur tension-courant (142), et
l'extrémité de sortie du circuit de calage est en outre raccordée à une extrémité d'entrée du convertisseur tension-courant au moyen du premier diviseur de tension, une extrémité de sortie du convertisseur tension-courant étant raccordée à la deuxième extrémité d'entrée du comparateur de courant et étant agencée pour fournir la valeur de courant de référence.

7. Circuit de commande selon la revendication 5, dans lequel le circuit comparateur comprend en outre un deuxième diviseur de tension (152), et
l'extrémité de sortie du circuit de calage est en outre raccordée à la deuxième extrémité d'entrée du comparateur de tension au moyen du deuxième diviseur de tension et est agencée pour fournir la valeur de tension de référence.

8. Circuit de commande selon une quelconque revendication précédente, comprenant en outre : un commutateur pour contrôler si le circuit de mesure de température fonctionne.

9. Circuit de commande selon la revendication 8 lorsqu'elle dépend de la revendication 2, dans lequel le commutateur est un premier commutateur (K1) disposé entre le circuit de calage et le miroir de courant.

10. Circuit de commande selon la revendication 8 lorsqu'elle dépend de la revendication 2, dans lequel le commutateur est un deuxième commutateur (K2) disposé entre la deuxième extrémité de sortie du miroir de courant et la connexion entre le transistor abaisseur et l'extrémité de commande.

FIG. 1

FIG. 2

FIG. 3

FIG. 4

FIG. 5

FIG. 6

FIG. 7

FIG. 8

FIG. 9

FIG. 10

FIG. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 111799761 A